# EUROPEAN PATENT APPLICATION

(11) **EP 3 800 000 A1**
(43) Date of publication of application: **07.04.2021**
(21) Application number: 20197577.8
(22) Date of filing: 22.09.2020
(51) Int. Cl.: B23K 26/0622, B23K 26/352, C09J 5/02

(54) **LASER IRRADIATION DEVICE AND SURFACE ROUGHENING METHOD USING SAME**

(30) Priority: 24.09.2019 JP 2019173559
(71) Applicant: Phoenix Electric Co., Ltd., Himeji-shi, Hyogo 679-2122 (JP)
(72) Inventor: GOUDA, Tetsuya, Himeji-shi,, Hyogo 6792122 (JP); WATANABE, Kana, Himeji-shi,, Hyogo 6792122 (JP); KINOSHITA, Masaaki, Himeji-shi,, Hyogo 6792122 (JP)
(74) Representative: Horn Kleimann Waitzhofer Patentanwälte PartG mbB

(57) **Abstract**

It is intended to provide a laser irradiation device, whereby it is made possible to irradiate a laser beam optimal to perform roughening treatment for the surface of a member in order to enhance adhesiveness on the surface of the member, and simultaneously, a laser diode, even when used as a light source of the laser beam, can be mitigated in damage. The present laser irradiation device (10) irradiates a laser beam (L) at intervals of predetermined time. At one time of irradiation, the laser beam (L) has a waveform composed of a former portion (100) and a latter portion (104). In the former portion (100), an increase rate of irradiation intensity per unit time is maximized on an outset of irradiation and is gradually reduced as the irradiation intensity approaches a maximum. In the latter portion (104), a reduction rate of irradiation intensity per unit time is maximized after the former portion (100) and is gradually reduced as the irradiation intensity approaches a baseline current.

## Description

### BACKGROUND OF THE INVENTION

### Field of the Invention

The present invention relates to a laser irradiation device that roughens the surface of a member to enhance adhesiveness on the surface of the member and relates to a surface roughening method using the same.

### Background Art

When a given member is attached to an object with adhesive, roughening is generally performed for the surface of the member as pretreatment. For example, as the "roughening" treatment, a variety of techniques are generally used as follows: a method using sandpaper, sandblasting, water blasting, and chemical treatment.

However, the respective techniques have posed the following drawbacks: the method using sandpaper is of a contact type, and hence, has caused fluctuations in quality of the roughened surface; sandblasting has posed dust-related problems on working environment; and water blasting and chemical treatment have required draining facilities.

In view of the above, roughening treatment using a laser beam has been developed to solve the drawbacks described above. This roughening treatment is of a non-contact type, whereby fluctuations in quality of the roughened surface can be inhibited. Simultaneously, this roughening treatment neither pose any problems on working environment nor require draining facilities.

For example, as described in Japan Laid-open Patent Application Publication No. S62-103317, there has been developed a technology for irradiating the surface of a member made of metal or so forth with a short-wavelength laser beam or a long-wavelength laser beam in order to roughen the surface of the member.

However, when the surface of a member is roughened to enhance adhesiveness on the surface of the member, chances are that adhesiveness on the member surface is not necessarily enhanced and is rather degraded by simply increasing the intensity of the laser beam or by simply increasing the number of irradiated laser beams per unit area on the member surface.

Besides, it is also concerned that a laser diode, provided for generating a laser beam, is undesirably damaged by simply increasing the intensity of the laser beam.

The present invention has been produced in view of the drawbacks described above. It is an object of the present invention to provide a laser irradiation device and a surface roughening method using the same, whereby it is made possible to irradiate a laser beam optimal to perform roughening for the surface of a member in order to enhance adhesiveness on the member surface, and simultaneously, a laser diode, even when used as a light source of the laser beam, can be mitigated in damage.

### SUMMARY OF THE INVENTION

According to an aspect of the present invention, a laser irradiation device is provided that roughens a surface of a member by irradiating a laser beam on the surface of the member so as to enhance adhesiveness on the surface of the member. The laser irradiation device is characterized in that the laser beam is irradiated at intervals of predetermined time, and the laser beam at one time of irradiation has a waveform including a former portion and a latter portion. In the former portion, an increase rate of irradiation intensity per unit time is maximized on an outset of irradiation and is gradually reduced as the irradiation intensity approaches a maximum. In the latter portion, a reduction rate of irradiation intensity per unit time is maximized after the former portion and is gradually reduced as the irradiation intensity approaches a baseline current.

Preferably, the laser irradiation device is characterized in that the waveform of the laser beam at one time of irradiation further includes an intermediate portion in which the increase rate of irradiation intensity per unit time approaches zero. The intermediate portion is formed between the former portion and the latter portion.

According to another aspect of the present invention, a surface roughening method is provided that irradiates a laser beam on a surface of a CFRP member by the laser irradiation device described above so as to enhance adhesiveness on the CFRP member.

Preferably, the surface roughening method further includes the following steps: irradiating a plurality of laser beams that include the laser beam and are aligned in a row; and irradiating the plurality of laser beams on the surface of the CFRP member at intervals of predetermined time by moving the laser irradiation device in a moving direction orthogonal to the row of the plurality of laser beams. The surface roughening method is characterized in that a ratio of a longitudinal interval size to a longest diameter is greater than or equal to 25% and less than or equal to 800%, where the longest diameter is defined as a moving directional length of each of recesses formed by irradiating the plurality of laser beams, and the longitudinal interval size is defined as a size of an interval between adjacent two of the recesses in the moving direction.

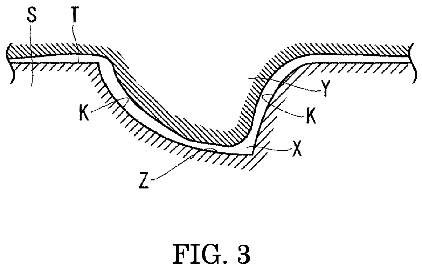

According to the present invention, the following configuration is performed: in the former phase of irradiating the laser beam on the surface of the member, irradiation intensity is quickly increased, and then, the increase rate of irradiation intensity per unit time is gradually reduced, whereas in the latter phase of irradiation, irradiation intensity is quickly reduced. Accordingly, as shown in FIG. 3, the recess is formed on the surface of the member in the irradiation position of the laser beam such that the middle part thereof is deeply recessed as a bottom. Moreover, the recess is shaped to have a cross section gently slanting toward the bottom.

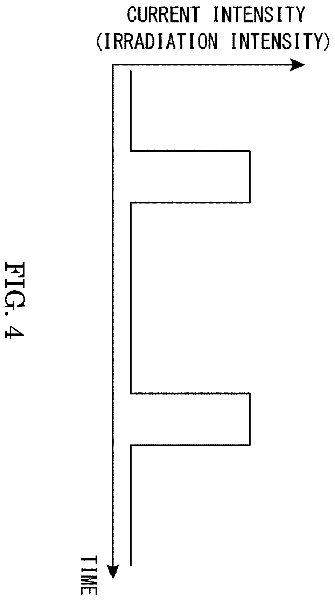

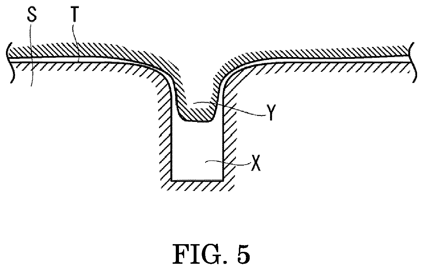

Thus, with the configuration that the recess is formed on the surface of the member while being shaped to have a cross section including a slope gently slanting toward the bottom, even in applying adhesive with a certain high level of viscosity onto the surface of the member, the recess enables the adhesive to flow to the bottom more easily than, for instance, a recess formed in use of a square-wave laser beam (see FIG. 4) so as to be shaped to have a cross section having an approximately rectangular shape (see FIG. 5). Because of this, adhesiveness on the surface of the member can be enhanced.

Besides, the increase rate of irradiation intensity per unit time is gradually reduced in the former phase of irradiation, whereby it is possible to avoid sudden rise of current, i.e., occurrence of current spike. Hence, even in use of a laser diode as a light source of the laser beam, the laser diode can be mitigated in damage.

### BRIEF DESCRIPTION OF THE DRAWINGS

Referring now to the attached drawings which form a part of this original disclosure:
FIG. 1 is a diagram showing a laser irradiation device 10 according to an exemplary embodiment to which the present invention is applied;
FIG. 2 is a chart showing a waveform of a laser beam L in the exemplary embodiment to which the present invention is applied;
FIG. 3 is a cross-sectional view of a member S showing the shape of a recess X formed by the laser beam L in the exemplary embodiment to which the present invention is applied;
FIG. 4 is a chart showing a waveform of a square-wave laser beam;
FIG. 5 is a cross-sectional view of the member S showing a recess formed by the square-wave laser beam;
FIG. 6 is a diagram of the laser irradiation device 10 according to modification 1;
FIG. 7 is a plan view of the member S showing a large number of recesses X formed by the laser irradiation device 10 according to modification 1; and
FIG. 8 is a chart showing a relation between longitudinal interval size and adhesion strength.

### DETAILED DESCRIPTION OF EMBODIMENTS

### (Configuration of Laser Irradiation Device 10)

A configuration of a laser irradiation device 10 to which the present invention is applied will be hereinafter explained with reference to drawings. It should be noted that the laser irradiation device 10, to which the present invention is applied, may be used in, for instance, treatment for roughening a surface T of a CFRP (Carbon Fiber Reinforced Plastic) member S as with the present exemplary embodiment, and may be used in treatment for roughening the surface of a member made of not only CFRP but also metal or so forth.

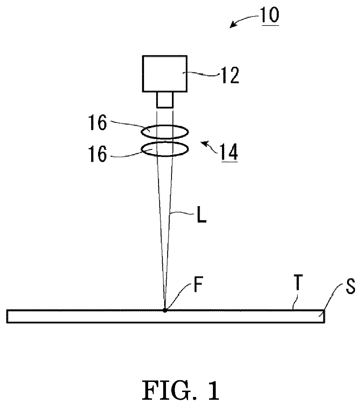

As shown in FIG. 1, the laser irradiation device 10 mainly includes a laser light source 12 and a light collector 14.

The laser light source 12 is a member for generating a laser beam L with a predetermined wavelength and a predetermined waveform. In the present exemplary embodiment, a laser diode (semiconductor laser) is used as the laser light source 12. Obviously, the laser light source 12 is not limited to this; for instance, a laser processor capable of generating the laser beam L with higher power may be used.

The light collector 14 is a member for concentrating the laser beam L irradiated from the laser light source 12 on a predetermined focal position F. In the present exemplary embodiment, the light collector 14 is formed by combination of two convex lenses 16 with respect to one laser light source 12. The focal position F is set on the surface T of the member S (CFRP member in the present exemplary embodiment) for which roughening treatment is performed. The configuration of the light collector 14 is not limited as well to that in the present exemplary embodiment. For example, a reflector may be used as the light collector 14, or alternatively, a lens and a reflector may be used in combination to form the light collector 14.

The laser beam L irradiated from the laser light source 12 is refracted at the light collector 14 and is then concentrated on the focal position F, i.e., the surface T of the member S.

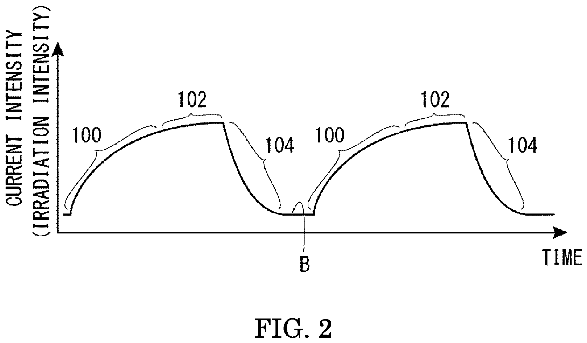

The waveform of the laser beam L irradiated from the laser light source 12 will be hereinafter explained in detail. As shown in FIG. 2, the laser beam L has a pulse-like waveform. One recess X is configured to be formed on the surface T of the member S in a single pulse cycle that the value of electric current increases from a baseline current B, and thereafter, reduces to the baseline current B again. Besides, the pulse cycles occur at intervals of predetermined time, and the laser beam L is irradiated in each pulse cycle. It should be noted that the value of the baseline current B may be zero, or alternatively, may be a predetermined value greater than zero.

In the present exemplary embodiment, the laser beam L has a waveform composed of a former portion 100, an intermediate portion 102 and a latter portion 104 when the single pulse cycle thereof is focused. In the former portion 100, an increase rate of irradiation intensity (current intensity) per unit time is maximized on the outset of irradiation and is then gradually reduced as irradiation intensity (current intensity) approaches the maximum. In the intermediate portion 102, the increase rate of irradiation intensity (current intensity) per unit time approaches zero. In the latter portion 104, a reduction rate of irradiation intensity (current intensity) per unit time is maximized after occurrence of the intermediate portion 102 and is then gradually reduced as irradiation intensity (current intensity) approaches the baseline current B.

Through the entire specification of the present invention, the state appearing in the intermediate portion 102-the increase rate of irradiation intensity (current intensity) per unit time approaches zero-means that the increase rate of irradiation intensity (current intensity) per unit time becomes less than or equal to 10%, where the maximum increase rate thereof on the outset of irradiation is defined as 100%.

It should be noted that in the present invention, the intermediate portion 102 is not indispensable as a constituent element of the waveform of the laser beam L; the waveform of the laser beam L may be composed of the former portion 100 and the latter portion 104.

According to the present exemplary embodiment, the following configuration is performed: in the former phase of irradiating the laser beam L on the surface T of the member S, irradiation intensity (current intensity) is quickly increased, and then, the increase rate of irradiation intensity (current intensity) per unit time is gradually reduced, whereas in the latter phase of irradiation, irradiation intensity (current intensity) is quickly reduced. Accordingly, as shown in FIG. 3, the recess X is formed on the surface T of the member S in the irradiation position of the laser beam L such that the middle part thereof is deeply recessed as a bottom Z. Moreover, the recess X is shaped to have a cross section gently slanting toward the bottom Z.

Thus, with the configuration that the recess X is formed on the surface T of the member S while being shaped to have a cross section including a slope K gently slanting toward the bottom Z, even in applying adhesive Y with a certain high level of viscosity onto the surface T of the member S, the recess X enables the adhesive Y to flow to the bottom Z more easily than, for instance, a recess formed in use of a square-wave laser beam (see FIG. 4) so as to be shaped to have a cross section having an approximately rectangular shape (see FIG. 5). Because of this, adhesiveness on the surface T of the member S can be enhanced.

It should be noted that as described above, when the laser beam L has a waveform composed of the former portion 100 and the latter portion 104, the recess X formed by the laser beam L has a cross section that the bottom Z is short in the width direction (alternatively, a cross section composed only of the gentle slope K almost without the bottom Z). Even in this case, adhesiveness on the surface T of the member S is still enhanced because the recess X has a cross section including the gentle slope K. However, compared to this, the configuration of the recess X having a cross section including the bottom Z (i.e., the configuration of the laser beam L having a waveform including the intermediate portion 102) is more preferable in terms of enhancement in adhesiveness on the surface T of the member S.

Besides, the increase rate of irradiation intensity (current intensity) per unit time is gradually reduced in the former phase of irradiation, whereby it is possible to avoid sudden rise of electric current, i.e., occurrence of current spike. Hence, even in use of a laser diode as the light source 12 of the laser beam L, the laser diode can be mitigated in damage.

### (Modification 1)

In the exemplary embodiment described above, the laser irradiation device 10 is composed of a single pair of the laser light source 12 and the light collector 14. Alternatively, the laser irradiation device 10 may be composed of a plurality of pairs of the laser light source 12 and the light collector 14.

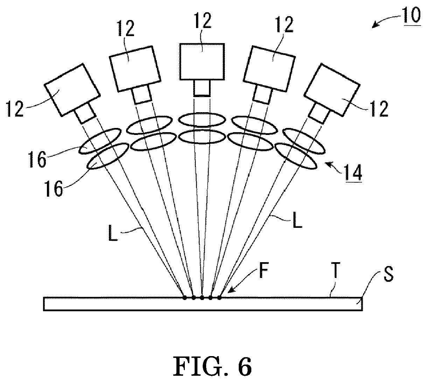

As shown in FIG. 6, the laser irradiation device 10 according to modification 1 is composed of five pairs of the laser light source 12 and the light collector 14 in combination.

The focal positions F of the laser beams L irradiated on the member S from the respective laser light sources 12 are set to be aligned in a row at predetermined intervals.

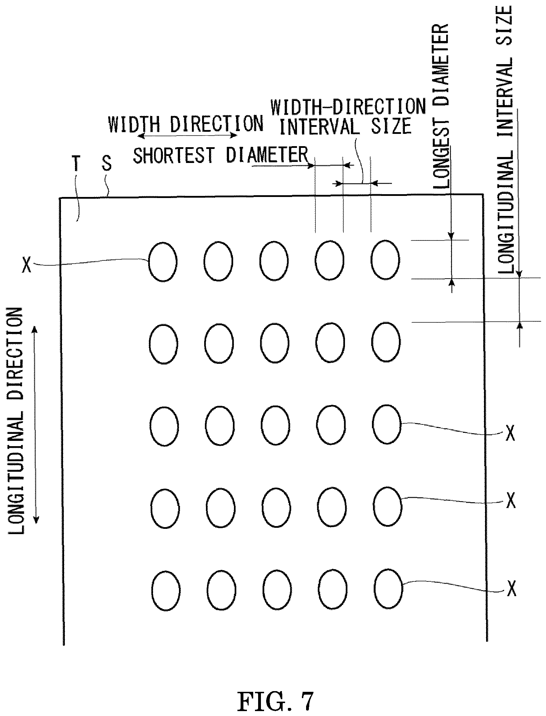

The laser irradiation device 10 is caused to irradiate the laser beams L at intervals of predetermined time, while being entirely moved in a direction orthogonal to the aligning direction of the focal positions F (hereinafter, the aligning direction will be referred to as "width direction", whereas the direction orthogonal thereto will be referred to as "longitudinal direction"). Accordingly, the recesses X can be formed in a grid pattern on the surface T of the member S as shown in FIG. 7.

### (Experimental Example)

With the laser irradiation device 10, the laser beams L were irradiated on the surface T of CFRP member (the member S) made of a large number of carbon fibers extending approximately in parallel alignment with each other. In this condition, the following parameters are set: the diameter of each recess X formed by each laser beam L; width-directional interval size, i.e., the size of interval between width-directionally adjacent focal positions F in which adjacent laser beams L are irradiated; and longitudinal interval size, i.e., the size of interval between longitudinally adjacent focal positions F in which each laser beam L is irradiated. In this setting, a preferred value for the longitudinal interval size was examined. It should be noted that the extending direction of the carbon fibers contained in the CFRP member (the member S) is herein matched with "longitudinal direction".

The member S is fixed, whereas the laser irradiation device 10 is caused to irradiate the laser beams L with a pulse-like waveform on the member S at intervals of predetermined time, while being moved in the longitudinal direction. Because of this, each recess X is made in the shape of an ellipse elongated in the longitudinal direction as seen in a plan view. In the following explanation, when the recess X is seen in the plan view, the longitudinal length thereof will be referred to as "longest diameter", whereas the width-directional length thereof will be referred to as "shortest diameter".

In the present experiment, "longest diameter" is set to 0.1 mm, whereas "shortest diameter" is set to 0.05 mm. Besides, post-roughening adhesion strength on the CFRP member (the member S) was examined, where the width-directional interval size is made constant at 0.05 mm, whereas the longitudinal interval size is made variable.

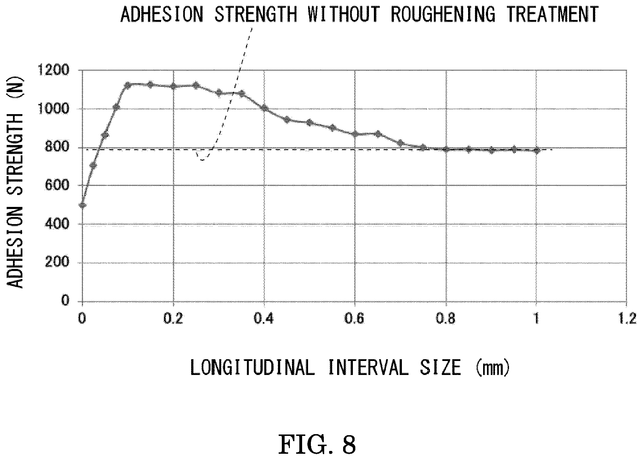

The CFRP member (the member S) and a round rod are adhered by epoxy adhesive (DENATITE XNR3324/XNH3324 (two-part liquid) manufactured by Nagase ChemteX Corporation). The round rod is herein made of stainless steel with a diameter of 10 mm and the surface thereof had been processed with sandblasting (with grit #180 for 5 seconds at distance of 10 mm). The CFRP member (the member S) and the round rod were left in this condition for 0.5 hours at 100 Celsius degrees. The round rod was then pulled to be separated from the CFRP member (the member S). At the point of time of separation, a force (N) was measured as adhesion strength. Experimental results are shown in TABLE 1 and FIG. 8.

**[TABLE 1]**

| LONGITUDINAL INTERVAL SIZE (mm) | RATIO OF LONGITUDINAL INTERVAL SIZE TO LONGEST DIAMETER | ADHESION STRENGTH (N) |
|---|---|---|
| 0 | 0% | 500.74 |
| 0.025 | 25% | 704.24 |
| 0.05 | 50% | 864.8 |
| 0.075 | 75% | 1006.86 |
| 0.1 | 100% | 1119.38 |
| 0.15 | 150% | 1124.72 |
| 0.2 | 200% | 1116.645 |
| 0.25 | 250% | 1119.62 |
| 0.3 | 300% | 1082.44 |
| 0.35 | 350% | 1076.88 |
| 0.4 | 400% | 1 002.46 |
| 0.45 | 450% | 945.66 |
| 0.5 | 500% | 927.48 |
| 0.55 | 550% | 900.65 |
| 0.6 | 600% | 868.76 |
| 0.65 | 650% | 868.54 |
| 0.7 | 700% | 821.88 |
| 0.75 | 750% | 800.4 |
| 0.8 | 800% | 788.66 |
| 0.85 | 850% | 790.56 |
| 0.9 | 900% | 784.22 |
| 0.95 | 950% | 786.55 |
| 1 | 1000% | 782.46 |

When the surface of the CFRP member (the member S) had not been processed with roughening treatment, the adhesion strength was measured as 785.2N. As shown in the experimental results, when the longitudinal interval size was too short, the adhesion strength was weaker than when the CFRP member (the member S) had not been processed with roughening treatment. In the course of increasing the longitudinal interval size, it was also found that at some level of longitudinal interval size, the adhesion strength was approximately equal to that when the CFRP member (the member S) had not been processed with roughening treatment. In other words, roughening treatment was meaningless at some level of longitudinal interval size.

In view of the above, a ratio of the longitudinal interval size to the longest diameter of the recess X was set to be greater than or equal to 25% and less than or equal to 800%, whereby the adhesion strength could be enhanced in comparison with that without roughening treatment for the CFRP member (the member S).

Besides, it is preferable to set the ratio of the longitudinal interval size to the longest diameter of the recess X to be greater than or equal to 50% and less than or equal to 650% in that the adhesion strength could be enhanced by 10% or greater than that without roughening treatment for the CFRP member (the member S).

Furthermore, it is more preferable to set the ratio of the longitudinal interval size to the longest diameter of the recess X to be greater than or equal to 75% and less than or equal to 450% in that the adhesion strength could be enhanced by 20% or greater than that without roughening treatment for the CFRP member (the member S).

It should be noted that, regarding a relation between the width-directional interval size and the adhesion strength, the following was found from the results of another experiment: the width-directional interval size does not exert any effect on the adhesion strength based on the premise that the width-directional interval size is greater than zero.

In addition, the CFRP member S containing unidirectional carbon fibers was used in the experiment described above. However, even in use of a type of CFRP member containing carbon fibers woven in plain or twill pattern in the longitudinal direction, enhancement in adhesion strength can be similarly achieved if the conditions of the experiment described above are satisfied.

This is also true of various types of FRP (Fiber Reinforced Plastics) member using fiber material other than carbon such as glass fiber, ceramic fiber, aramid fiber, aluminum fiber, cellulose nanofiber, or so forth.

Furthermore, it was found as well that, even when the longest diameter and the shortest diameter of the recess X are interchanged, a relation between the adhesion strength and a ratio of the longitudinal interval size to the shortest diameter of the recess X was established similarly to the relation described above.

It should be understood that the embodiment herein disclosed is illustrative only and is not restrictive in all aspects. It is intended that the scope of the present invention is indicated by the appended claims rather than the explanation described above, and encompasses all the changes that come within the meaning and the range of equivalents of the appended claims.

## Claims

1. A laser irradiation device (10) roughening a surface of a member (S) by irradiating a laser beam (L) on the surface of the member (S) so as to enhance adhesiveness on the surface of the member (S), wherein
the laser beam (L) is irradiated at intervals of predetermined time, and
the laser beam (L) at one time of irradiation has a waveform including a former portion (100) in which an increase rate of irradiation intensity per unit time is maximized on an outset of irradiation and is gradually reduced as the irradiation intensity approaches a maximum, and
a latter portion (104) in which a reduction rate of irradiation intensity per unit time is maximized after the former portion (100) and is gradually reduced as the irradiation intensity approaches a baseline current.

2. The laser irradiation device (10) according to claim 2, wherein the waveform of the laser beam at one time of irradiation further includes an intermediate portion (102) in which the increase rate of irradiation intensity per unit time approaches zero, the intermediate portion (102) formed between the former portion (100) and the latter portion (104).

3. A surface roughening method of irradiating a laser beam (L) on a surface of a CFRP member by the laser irradiation device (10) recited in Claim 1 or 2 so as to enhance adhesiveness on the CFRP member.

4. The surface roughening method according to claim 3, further comprising:
irradiating a plurality of laser beams including the laser beam (S), the plurality of laser beams aligned in a row; and
irradiating the plurality of laser beams on the surface of the CFRP member at intervals of predetermined time by moving the laser irradiation device (10) in a moving direction orthogonal to the row of the plurality of laser beams, wherein a ratio of a longitudinal interval size to a longest diameter is greater than or equal to 25% and less than or equal to 800%, the longest diameter defined as a moving directional length of each of recesses formed by irradiating the plurality of laser beams, the longitudinal interval size defined as a size of an interval between adjacent two of the recesses in the moving direction.
